# FASCICULE DE BREVET EUROPEEN

(11) **EP 1 452 393 B1**
(45) Date de publication et mention de la délivrance du brevet: **16.08.2006**
(21) Numéro de dépôt: 04368012.3
(22) Date de dépôt: 24.02.2004
(51) Int. Cl.: B60R 5/04

(54) **Tablette arrière amovible de véhicule automobile et son dispositif de support associé**
Abnehmbare Hutablage für Fahrzeug und ihre Befestigungsvorrichtung
Removable parcel shelf for vehicle and its fixing system

(30) Priorité: 25.02.2003 FR 0302732
(43) Date de publication de la demande: 01.09.2004
(73) Titulaire: MECAPLAST S.A.M., 98014 Monaco Cédex (MC)
(72) Inventeur: Tessaud, Bernard, 16220 Ecuras (FR); Morando, Patrick, 06100 Nice (FR)
(74) Mandataire: de Zeeuw, Johan Diederick

(56) Documents cités:
- FR-A- 2 816 560
- US-A- 5 970 884
- US-B1- 6 394 002

## Description

La présente invention concerne les dispositifs permettant la mise en place et l'articulation des tablettes arrières de véhicule automobile sur un support adapté du véhicule et concerne en particulier une tablette arrière amovible d'un véhicule automobile et son dispositif de support associé.

Les véhicules automobiles sont équipés d'une tablette arrière, destinée à séparer le coffre du véhicule de l'habitacle. Cette tablette est en général montée pivotante, de façon à permettre l'accès au bagages. Il est de plus souhaitable de pouvoir démonter facilement la tablette, de façon à pouvoir augmenter le volume du coffre.

Différents système d'articulation de tablette ont été proposés. Un système classique est d'articuler la tablette autour d'un axe de rotation. Un tel agencement, bien que largement utilisé par le passé, est en général compliqué et coûteux puisqu'il implique l'utilisation d'éléments rapportés (les axes), associés à la tablette. Le document EP 0 820 390, qui sert de base pour la présentation en deux parties des revendications 1, 6 et 12, décrit un dispositif simplifié où les axes sont intégrés à la tablette. Dans ce dispositif, les coins de la tablette s'engagent dans des logements complémentaires cylindriques, prévus sur les supports latéraux. Ces logements sont définis d'une part par un bord inférieur et d'autre part par un bord supérieur constitué d'une languette rendue déformable par son élasticité. Le montage consiste à placer la tablette devant les logements dans une position sensiblement horizontale, et par un mouvement vers l'avant de la tablette sous un angle faible par rapport à l'horizontale, d'insérer les coins de la tablette dans les logements complémentaires. Cette insertion est possible grâce à la déformation de la languette supérieure. Quand la languette reprend sa position initiale, elle referme les logements. Une fois la tablette insérée, tout mouvement horizontal est bloqué par la présence d'une butée située sur le bord inférieur du support latéral.

Si ce dispositif de montage est particulièrement avantageux, il implique cependant que la tablette ait une épaisseur relativement importante pour qu'elle ne puisse pas se désengager du logement, lors d'un choc par exemple ou lors des vibrations du véhicule. Si des tablettes obtenues par moussage du polyuréthane ont des épaisseurs relativement élevées (entre 20 et 30 mm), les procédés actuels de fabrication des tablettes (par exemple thermoformage) permettent d'obtenir des tablettes rigides de faible épaisseur (environ 5 mm). Ce dispositif de montage, sans axes rapportés ne peut plus alors être utilisé. De plus, ce dispositif fonctionne grâce à l'élasticité de la languette supérieure. Après plusieurs opérations de montage/démontage et lors des relevages de la tablette et à cause du fluage des matériaux thermoplastiques qui composent les supports latéraux, l'élasticité s'atténue, ce qui rend le dispositif peu fiable dans le temps.

Un autre dispositif décrit dans le document EP 1 059 203 permet d'utiliser n'importe quelle épaisseur de tablette. Dans ce dispositif, la tablette comporte deux coins formés de langues sensiblement planes et relié à la partie principale de la tablette par une charnière consistant en une réduction locale de l'épaisseur de la langue et représentant un axe d'articulation. Chaque langue comporte également un bossage. Les supports latéraux destinés à recevoir la tablette comportent des fentes dont la forme est complémentaire de celle des langues et comportent donc des creux complémentaires des bossages. La mise en place de la tablette consiste à insérer les langues dans les fentes des supports latéraux et à pousser la tablette jusqu'à ce que les bossages des langues s'insèrent par déformation élastique dans les creux prévus dans les fentes des supports latéraux. Malheureusement, ce dispositif présente également une faible tenue dans le temps due aux déformations successives des pièces lors des nombreuses manipulations de la tablette sur ses supports.

Un autre dispositif est présenté dans le document FR2816560. Des supports formant tasseaux sont disposés sur les parois du véhicule, dans le compartiment arrière de l'habitacle du véhicule. Ces tasseaux sont chacun munis d'une ouverture localisée à proximité des sièges arrières. La tablette est insérée dans ces ouvertures. Cette tablette est formée par deux plateaux possédant des inclinaisons différentes. Ces deux plateaux sont séparés par une zone charnière. La rotation de la tablette s'effectue au niveau de l'ouverture des tasseaux et sur la zone charnière de la tablette. Cependant, pour un tel dispositif, le retrait de la tablette nécessite une manoeuvre bien précise. En effet, la présence des deux pentes de la tablette rend complexe la manipulation pour extraire la tablette des ouvertures.

C'est pourquoi le but de l'invention est de fournir un dispositif permettant le maintien et l'articulation d'une tablette arrière de véhicule, fiable dans le temps donc supportant sans déformations de nombreux montages et démontages successifs et ce, quelque soit l'épaisseur de la tablette.

L'objet de l'invention est donc une tablette arrière de véhicule automobile selon la revendication 1, un dispositif selon la revendication 6, ainsi qu'un ensemble selon la revendication 12.

Les buts, objets et caractéristiques de l'invention apparaîtront plus clairement à la lecture de la description qui suit faite en référence aux dessins dans lesquels :
La figure 1 représente une vue en perspective de la tablette arrière selon l'invention,
La figure 2 représente une vue en perspective du dispositif selon l'invention,
La figure 3 représente une vue en coupe du dispositif selon l'invention,
La figure 4 représente une seconde vue en coupe du dispositif selon l'invention.

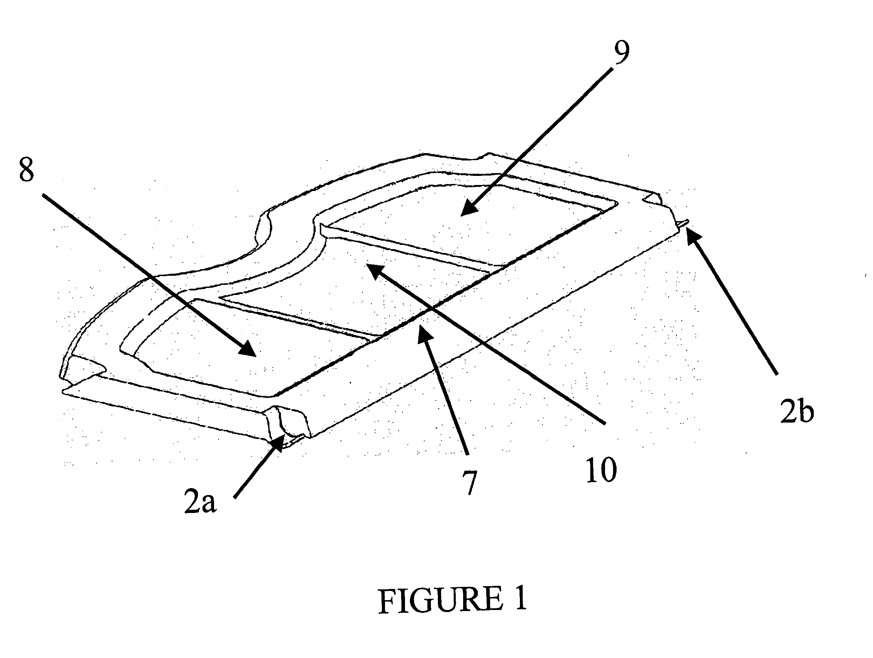

Selon la figure 1, la tablette est monobloc et constituée d'une partie principal 10 sensiblement plane mais pouvant comporter à sa surface des découpes en creux 8 et 9 servant de logements pour recevoir éventuellement des objets. La forme générale de la tablette est adaptée au véhicule dans lequel elle vient s'insérer de façon à constituer une séparation amovible entre le coffre et l'habitacle du véhicule. Elle comporte un bord avant 7 destiné à venir contre les sièges arrières du véhicule. La tablette est réalisée de préférence par thermoformage mais peut être également fabriquée par injection thermoplastique, par soufflage ou par tout autre procédé connu. Sur ses deux coins avant, c'est à dire les coins positionnés aux extrémités du bord avant et destinés à venir s'insérer et s'articuler dans des supports latéraux du véhicule, la tablette comporte des langues 2a et 2b. Ces deux langues sont identiques et pourraient également se rejoindre de façon à constituer une unique langue s'étendant sur toute la largeur de la tablette c'est à dire le long du bord 7 de la tablette, sans pour autant sortir du cadre de l'invention.

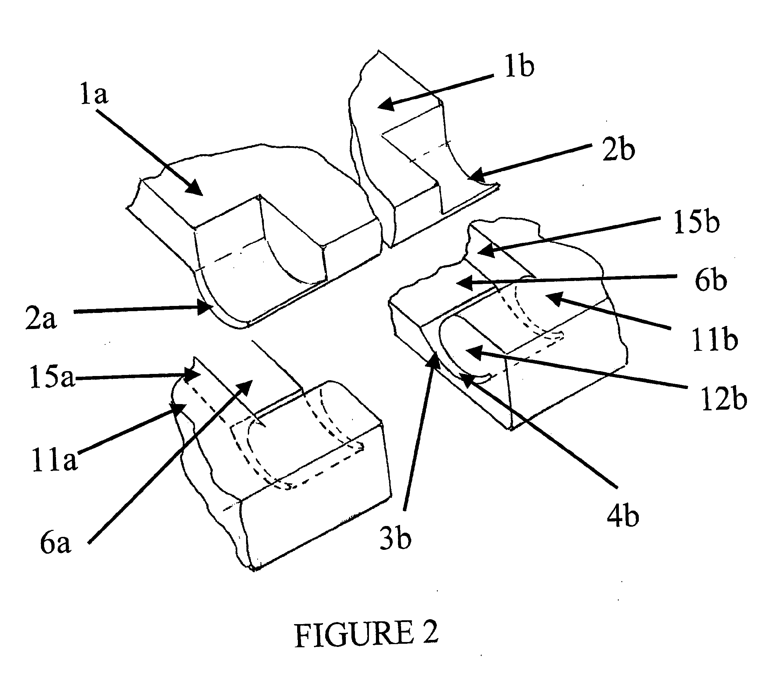

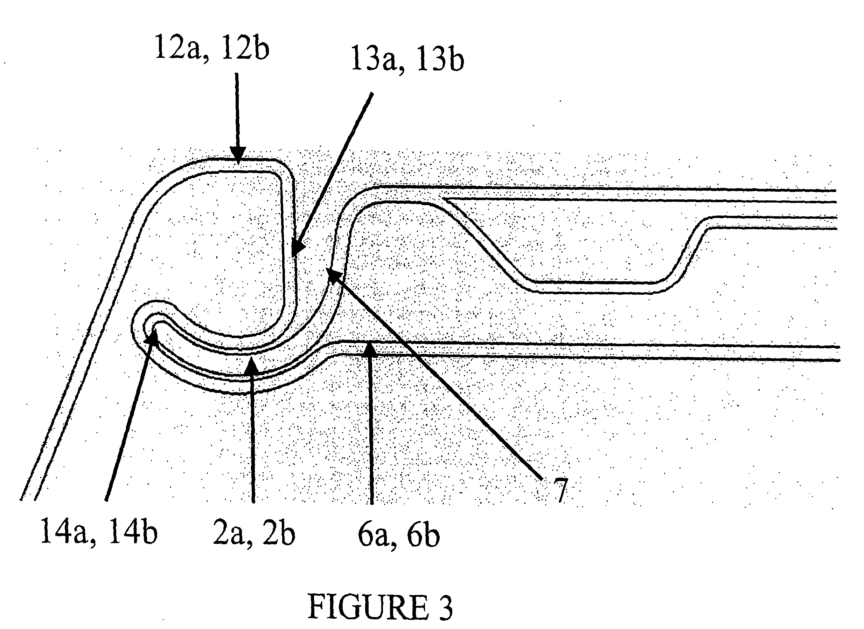

En référence à la figure 2, le dispositif selon l'invention comprend principalement les langues 2a et 2b formant les coins avant 1a et 1b de la tablette et les deux supports latéraux 11a et 11b destinés à supporter et maintenir la tablette en place dans le véhicule. Les deux supports latéraux composent le dispositif destiné à supporter la tablette et comportent chacun principalement une surface d'appui 6a, 6b, une butée 12a, 12b située à l'extrémité avant des surfaces d'appui et un logement 4a, 4b dont la forme est complémentaire de celle des coins 1a, 1b de la tablette c'est à dire des langues 2a, 2b. Les surfaces d'appui 6a, 6b sont bordées sur leurs côtés extérieurs d'une surface perpendiculaire 15a, 15b. Les logements 4a, 4b sont tels que leurs surface inférieures 3a, 3b sont des surfaces concaves situées dans le prolongement des surfaces d'appui 6a, 6b et leurs surfaces supérieures sont les surfaces inférieures des butées 12a, 12b. Les formes complémentaires des langues 2a, 2b et des logements 4a, 4b sont telles qu'elles présentent un profil concave en forme de cuillère, sensiblement semi-circulaire. Les langues ont de préférence une épaisseur comprise entre 2 et 5 mm, l'épaisseur des logements 4a, 4b est légèrement supérieure à celle des langues. Les butées 12a et 12b définissent une surface de révolution autour de laquelle la tablette pivote pour être mise en place dans sa position d'utilisation représentée en coupe selon la figure 3 et correspondant à la position dans laquelle la tablette sensiblement Horizontale est en appui sur les surfaces d'appui 6a, 6b. La surface de révolution est donc définie par un axe de rotation, situé approximativement au bout de la flèche 5, autour duquel la tablette est en rotation. Si le rayon de courbure de la surface de révolution est peu élevé, cet axe fait partie intégrante de la butée. Préférentiellement, la surface de révolution autour de laquelle la tablette pivote est définie par les surfaces supérieures des logements 4a, 4b. L'axe d'articulation 5 est commun aux deux butées 12a et 12b et est sensiblement perpendiculaire au plan médian vertical du véhicule. Les surfaces latérales 13a, 13b des butées contre lesquelles viennent se positionner le bord 7 de la tablette forment un angle au moins égal à 90° avec les surfaces d'appui 6a, 6b mais peut également former un angle supérieure à 90° avec les surfaces d'appui 6a, 6b, et ce, dans le but de faciliter la mise en place de la tablette dans sa position d'utilisation.

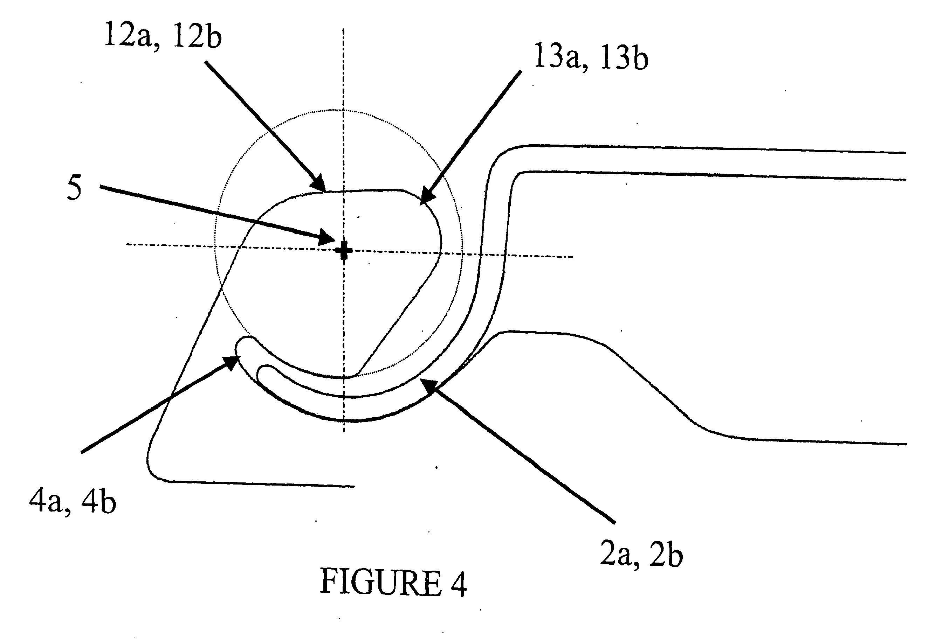

Selon la figure 4, dans laquelle les butées 12a, 12b ont une forme différente par rapport à la figure 3 en ce que les logements 4a, 4b sont plus courts et en ce que les surfaces latérales 13a, 13b des butées contre lesquelles viennent se positionner le bord 7 de la tablette sont arrondies. Dans ce cas, la tangente des surfaces 13a, 13b forment un angle supérieure à 90° avec les surfaces d'appui 6a, 6b, et la surface de révolution définies par les surfaces supérieures des butées 12a, 12b autour desquelles vient pivoter la tablette est définie par seulement une partie des surfaces entourant le logement. L'axe de rotation 5 est définie au centre d'un cercle 30. Le rayon du cercle 30 est tel que les surfaces supérieures des logements 4a, 4b définissant la surface de révolution autour de laquelle pivote la tablette, sont situées sur le cercle. Lorsque la tablette est en position d'utilisation, les langues 2a, 2b peuvent ne pas aller jusqu'au fond des logements tel qu'il est illustré dans la figure 4, sans pour autant sortir du cadre de l'invention. De plus, afin de ne pas gêner le retrait de la tablette, les logements 4a, 4b sont tels que leurs entrées s'évasent c'est à dire que leurs surfaces inférieures et supérieures s'éloignent l'une de l'autre à proximité de leur entrée. L'épaisseur des logements 4a, 4b peut être supérieure à celle des langues de 1 à 3 mm afin de maintenir un jeu des langues dans leurs logements.

De façon à mettre en place la tablette, les coins avant 1a, 1b de la tablette sont approchés des supports latéraux 11a, 11b de telle sorte que la tablette forme un angle d'environ 45° avec les surfaces d'appui 6a, 6b. Une partie des langues 2a, 2b se trouvent alors insérées à l'intérieur des logements 4a, 4b. L'utilisateur applique alors un léger mouvement de rotation à la tablette en appuyant vers le bas donc vers la position d'utilisation de la tablette. Les langues 2a, 2b entrent alors en rotation autour des surfaces de révolution définies par les butées 12a, 12b entraînant ainsi le pivotement de l'ensemble de la tablette de sorte que les langues viennent s'insérer complètement dans les logements 4a, 4b de façon à ce que les faces des langues 2a, 2b situées sur la face arrière de la tablette s'appuient contre les faces inférieures des logements 4a, 4b et que la tablette viennent en appui sur les surfaces d'appui 6a, 6b des supports latéraux 11a, 11b dans une position sensiblement horizontale. La position sensiblement horizontale de la tablette s'apprécie par rapport au véhicule automobile et correspond donc à une position parallèle au plan formé par les roues du véhicules. Le fait que l'épaisseur des logements 4a, 4b est légèrement supérieure à celle des langues 2a, 2b empêche tous frottements importants des pièces les unes contre les autres qui pourraient générer un effort supplémentaire de la part de l'utilisateur. De plus, les formes complémentaires et concaves des langues de la tablette et des logements dans lesquels elles s'imbriquent facilitent la mise en place de la tablette car l'utilisateur est alors guidé dans son mouvement qu'il réalise sans aucun effort ni risques de mauvais placement. De même, l'enlèvement de la tablette se fait en saisissant le bord arrière de la tablette et en le levant jusqu'à ce que la tablette forme avec les surfaces d'appui 6a, 6b un angle d'environ 45°, ce mouvement étant facilité par le pivotement des langues 2a, 2b dans les logements 4a, 4b autour des surfaces de révolution définies par les butées 12a, 12b donc autour de l'axe 5, puis en tirant la tablette de façon à dégager totalement les langues de leurs logements.

Une fois placée dans sa position d'utilisation, la tablette est stable et tout mouvement dans les trois directions par rapport aux plan de la tablette est empêché. En effet, la tablette est maintenue en place dans le sens transversal grâce aux surfaces de butée 15a, 15b situées perpendiculairement aux surfaces d'appui 6a, 6b. Dans le sens de la hauteur du véhicule, la tablette est maintenue grâce à l'articulation c'est à dire grâce aux butées 12a, 12b. Dans le sens longitudinal du véhicule c'est à dire vers l'avant et vers l'arrière du véhicule, les mouvements de la tablette sont empêchés grâce à la forme semi-circulaire des langues.

Les opérations de mise en place et d'enlèvement de la tablette amovible et pivotante peuvent être réalisés aussi souvent que nécessaire par l'utilisateur sans risques d'endommager l'ensemble composé de la tablette et du dispositif destiné à supporter la tablette, tels qu'une usure des pièces par altérations de l'élasticité ou par frottement.

Selon une variante du mode de réalisation préféré de l'invention, la tablette peut, dans sa position d'utilisation venir en appui sur des surfaces liées aux supports latéraux 11a, 11b autre que les surfaces d'appui 6a, 6b et non représentées sur les figures. Ces surfaces, sont positionnées perpendiculairement aux surfaces 15a, 15b et parallèlement aux surfaces d'appui 6a, 6b mais ne sont pas obligatoirement présentes sur toute la longueur des surfaces 15a, 15b. En effet, il peut s'agir de surfaces formant un décroché de petite longueur sur laquelle seule la partie arrière des côtés de la tablette vient s'appuyer. De plus, ces surfaces peuvent venir s'ajouter aux surfaces d'appui 6a, 6b, dans ce cas, la tablette est en appui à la fois sur elles et sur les surfaces d'appui 6a, 6b, ou bien, ces surfaces peuvent venir se substituer aux surfaces d'appui 6a, 6b et dans ce cas lorsque la tablette est en position d'utilisation, elle est en appui sur ces surfaces.

## Revendications

1. Tablette arrière de véhicule automobile comprenant une partie principale (10) et deux coins (1a, 1b) positionnés sur le bord avant de la tablette destinés à s'adapter sur deux supports latéraux (11a, 11b) qui composent le dispositif destiné à supporter la tablette et qui comportent chacun un logement **caractérisé en ce que** chacun desdits coins est formé d'une langue (2a, 2b) à profil concave venant s'insérer dans le logement (4a, 4b) dudit support, chacun desdits logements ayant une forme semi-circulaire complémentaire de ladite langue.

2. Tablette selon la revendication 1, dans laquelle lesdites langues (2a, 2b) ont une épaisseur comprises entre 2 et 5 mm.

3. Tablette selon la revendication 1 ou 2, réalisée en matériau thermoplastique.

4. Tablette selon la revendication 1 ou 2, réalisée par thermoformage.

5. Tablette selon la revendication 1 ou 2, réalisée par injection.

6. Dispositif destiné à supporter une tablette arrière de véhicule automobile composé de deux supports latéraux (11a, 11b) comprenant chacun un logement (4a, 4b) adapté pour recevoir ladite tablette **caractérisé en ce que** chacun desdits logements a un profil concave semi-circulaire apte à recevoir un coin (1a, 1b) de ladite tablette, chacun des coins ayant une forme complémentaire audit logement.

7. Dispositif selon la revendication 6, dans lequel lesdits supports latéraux (11a, 11b) comprennent chacun une surface d'appui (6a, 6b) et une butée (12a, 12b), lesdits logements (4a, 4b) étant aménagés dans lesdites butées de façon à ce que leurs surfaces inférieures (3a, 3b) soient situées dans le prolongement desdites surfaces d'appui.

8. Dispositif selon la revendication 6 ou 7, dans lequel les surfaces supérieures desdits logements (4a, 4b) définissent une surface de révolution autour de laquelle la tablette pivote.

9. Dispositif selon l'une des revendications 6 à 8, dans lequel lesdites butées (12a, 12b) ont une surface latérale (13a, 13b) qui forment un angle au moins égal à 90° avec lesdites surfaces d'appui (6a, 6b).

10. Dispositif selon l'une des revendications 6 à 9, dans lequel lesdites butées (12a, 12b) ont une surface latérale (13a, 13b) qui forme un angle supérieur à 90° avec ladite surface d'appui (6a, 6b).

11. Dispositif selon l'une des revendications 6 à 10, dans lequel lesdits supports latéraux (11a, 11b) sont réalisés en matériau thermoplastique.

12. Ensemble comprenant une tablette arrière d'un véhicule automobile et un support de tablette, ladite tablette comprenant une partie principale et deux coins venant s'articuler sur ledit support de ladite tablette **caractérisé en ce que** :
lesdits coins (1a, 1b) forment une langue (2a, 2b) à profil concave, et **en ce que** ledit support de tablette comprend deux supports latéraux (11a, 11b) composés chacun d'une surface d'appui (6a, 6b), d'une butée (12a, 12b) et d'un logement (4a, 4b), lesdits logements étant aménagés dans lesdites butées de façon à ce que leurs surfaces inférieures (3a, 3b) soient situées dans le prolongement desdites surfaces d'appui et étant de forme semi-circulaire complémentaire à celle desdites langues (2a, 2b).

13. Ensemble selon la revendication 12, dans lequel lorsque lesdites langues (2a, 2b) sont insérées dans lesdits logements (4a, 4b) et lorsque la tablette est en appui sur lesdits supports latéraux (11a, 11b), ladite tablette est en position d'utilisation.

14. Ensemble selon la revendication 12 ou 13, dans lequel lesdits logements (4a, 4b) ont une épaisseur légèrement supérieures auxdites langues (2a, 2b).

15. Ensemble selon l'une des revendications 12 à 14, dans lequel lorsque la tablette est en position d'utilisation, la tablette est en appui sur lesdites surfaces d'appui (6a, 6b).

16. Ensemble selon l'une des revendications 12 à 15, dans lequel lorsque la tablette est en position d'utilisation, la tablette est en appui sur des surfaces liées aux supports latéraux (11a, 11b) et parallèles auxdites surfaces d'appui (6a, 6b).

## Claims

1. A rear shelf of a motor vehicle including a main part (10) and two corners (1 a, 1 b) positioned on the front edge of the shelf which are intended to fit onto two lateral supports (11 a, 11 b) which make up the device intended to support the shelf and which each comprise a housing, **characterised in that** each of said corners is formed by a tongue (2a, 2b) having a concave profile which is inserted into the housing (4a, 4b) of said support, each of said housings having a semi-circular form which is complementary to said tongue.

2. The shelf according to Claim 1, in which said tongues (2a, 2b) have a thickness of between 2 and 5mm.

3. The shelf according to Claim 1 or 2, made from thermoplastic material.

4. The shelf according to Claim 1 or 2, made by thermoforming.

5. The shelf according to Claim 1 or 2, made by injection.

6. A device intended to support a rear shelf of a motor vehicle made up of two lateral supports (11a, 11b) each including a housing (4a, 4b) which is adapted for receiving said shelf, **characterised in that** each of said housings has a semi-circular concave profile which is suitable for receiving a corner (1a, 1b) of said shelf, each of the corners having a form which is complementary to said housing.

7. The device according to Claim 6, in which said lateral supports (11 a, 11 b) each include a bearing surface (6a, 6b) and a catch (12a, 12b), said housings (4a, 4b) being arranged in said catches such that their lower surfaces (3a, 3b) are situated in alignment with said bearing surfaces.

8. The device according to Claim 6 or 7, in which the upper surfaces of said housings (4a, 4b) define a turning surface around which the shelf pivots.

9. The device according to one of Claims 6 to 8, in which said catches (12a, 12b) have a lateral surface (13a, 13b) which form an angle which is at least equal to 90° with said bearing surfaces (6a, 6b).

10. The device according to one of Claims 6 to 9, in which said catches (12a, 12b) have a lateral surface (13a, 13b) which forms an angle which is greater than 90° with said bearing surface (6a, 6b).

11. The device according to one of Claims 6 to 10, in which said lateral supports (11 a, 11 b) are made from thermoplastic material.

12. An assembly including a rear shelf of a motor vehicle and a shelf support, said shelf including a main part and two corners which are articulated on said support of said shelf, **characterised in that**:
said corners (1a, 1b) form a tongue (2a, 2b) having a concave profile, and **in that** said shelf support includes two lateral supports (11 a, 11 b) which are each made up of a bearing surface (6a, 6b), a catch (12a, 12b) and a housing (4a, 4b), said housings being arranged in said catches such that their lower surfaces (3a, 3b) are situated in alignment with said bearing surfaces and having a semi-circular form which is complementary to that of said tongues (2a, 2b).

13. The assembly according to Claim 12, in which, when said tongues (2a, 2b) are inserted into said housings (4a, 4b) and when the shelf is bearing upon said lateral supports (11a, 11b), said shelf is in a usage position.

14. The assembly according to Claim 12 or 13, in which said housings (4a, 4b) have a thickness which is marginally greater than said tongues (2a, 2b).

15. The assembly according to one of Claims 12 to 14, in which, when the shelf is in a usage position, the shelf is bearing upon said bearing surfaces (6a, 6b).

16. The assembly according to one of Claims 12 to 15, in which, when the shelf is in a usage position, the shelf is bearing upon the surfaces linked to the lateral supports (11a, 11 b) and parallel to said bearing surfaces (6a, 6b).

## Patentansprüche

1. Hutablage für Kraftfahrzeug mit einem Hauptteil (10) und zwei Ecken (1a, 1b), die am Vorderrand der Ablage positioniert sind und an zwei seitlichen Stützen (11 a, 11 b) angebracht werden sollen, die die Vorrichtung zur Abstützung der Ablage bilden und jeweils eine Aufnahme aufweisen, **dadurch gekennzeichnet, dass** jede der Ecken durch eine Zunge (2a, 2b) mit konkavem Profil gebildet ist, die in die Aufnahme (4a, 4b) der Stütze eingeführt wird, wobei jede der Aufnahmen eine zur Zunge komplementäre Halbkreisform aufweist.

2. Ablage nach Anspruch 1, bei der die Zungen (2a, 2b) eine Dicke zwischen 2 und 5 mm aufweisen.

3. Ablage nach Anspruch 1 oder 2, die aus thermoplastischem Material hergestellt ist.

4. Ablage nach Anspruch 1 oder 2, die durch Wärmeformen hergestellt ist.

5. Ablage nach Anspruch 1 oder 2, die durch Spritzen hergestellt ist.

6. Vorrichtung zur Abstützung einer Hutablage für ein Kraftfahrzeug, die aus zwei seitlichen Stützen (11 a, 11 b) besteht, die jeweils eine Aufnahme (4a, 4b) aufweisen, welche zur Aufnahme der Ablage ausgeführt ist, **dadurch gekennzeichnet, dass** jede der Aufnahmen ein halbkreisförmiges, konkaves Profil aufweist, das eine Ecke (1 a, 1b) der Ablage aufnehmen kann, wobei jede der Ecken eine zur Aufnahme komplementäre Form aufweist.

7. Vorrichtung nach Anspruch 6, bei der die seitlichen Stützen (11a, 11b) jeweils eine Anlagefläche (6a, 6b) und einen Anschlag (12a, 12b) aufweisen, wobei die Aufnahmen (4a, 4b) so in den Anschlägen ausgebildet sind, dass sich ihre unteren Flächen (3a, 3b) in der Verlängerung der Stützflächen befinden.

8. Vorrichtung nach Anspruch 6 oder 7, bei der die oberen Flächen der Aufnahmen (4a, 4b) eine rotationssymmetrische Fläche definieren, um die die Ablage schwenkt.

9. Vorrichtung nach einem der Ansprüche 6 bis 8, bei der die Anschläge (12a, 12b) eine Seitenfläche (13a, 13b) aufweisen, die mit den Stützflächen (6a, 6b) einen Winkel von mindestens 90° bildet.

10. Vorrichtung nach einem der Ansprüche 6 bis 9, bei der die Anschläge (12a, 12b) eine Seitenfläche (13a, 13b) aufweisen, die mit der Stützfläche (6a, 6b) einen Winkel von über 90° bildet.

11. Vorrichtung nach einem der Ansprüche 6 bis 10, bei der die seitlichen Stützen (11a, 11b) aus thermoplastischem Material hergestellt sind.

12. Eine Hutablage für ein Kraftfahrzeug und eine Ablagenstütze umfassende Anordnung, wobei die Ablage einen Hauptteil und zwei Ecken umfasst, die an der Stütze der Ablage angelenkt werden,
**dadurch gekennzeichnet, dass**
die Ecken (1a, 1 b) eine Zunge (2a, 2b) mit konkavem Profil bilden und dass die Ablagenstütze zwei seitliche Stützen (11a, 11 b) umfasst, die jeweils aus einer Stützfläche (6a, 6b), einem Anschlag (12a, 12b) und einer Aufnahme (4a, 4b) bestehen, wobei die Aufnahmen so in den Anschlägen ausgebildet sind, dass sich ihre unteren Flächen (3a, 3b) in der Verlängerung der Stützflächen befinden, und eine zur Form der Zungen (2a, 2b) komplementäre Halbkreisform aufweisen.

13. Anordnung nach Anspruch 12, bei der sich die Ablage in Gebrauchsstellung befindet, wenn die Zungen (2a, 2b) in die Aufnahmen (4a, 4b) eingeführt sind und wenn die Ablage an den seitlichen Stützen (11a, 11b) anliegt.

14. Anordnung nach Anspruch 12 oder 13, bei der die Aufnahmen (4a, 4b) eine Dicke aufweisen, die etwas größer ist als die Zungen (2a, 2b).

15. Anordnung nach einem der Ansprüche 12 bis 14, bei der die Ablage an den Stützflächen (6a, 6b) anliegt, wenn sich die Ablage in Gebrauchsstellung befindet.

16. Anordnung nach einem der Ansprüche 12 bis 15, bei der die Ablage an mit den seitlichen Stützen (11a, 11b) verbundenen und sich parallel zu den Anlageflächen (6a, 6b) erstreckenden Flächen anliegt, wenn sich die Ablage in Gebrauchsstellung befindet.
